# EUROPÄISCHE PATENTSCHRIFT

(11) **EP 4 405 591 B1**
(45) Veröffentlichungstag und Bekanntmachung des Hinweises auf die Patenterteilung: **23.04.2025**
(21) Anmeldenummer: 22789545.5
(22) Anmeldetag: 19.09.2022
(51) Int. Cl.: F16B 19/02, E04F 13/08, F16B 43/00, F16B 35/04

(54) **SYSTEM UND VERFAHREN ZUR BEFESTIGUNG VON FASSADENPLATTEN**
SYSTEM AND METHOD FOR FASTENING CURTAIN WALLING PANELS
SYSTÈME ET PROCÉDÉ POUR FIXER DES PANNEAUX DE FACADE

(30) Priorität: 23.09.2021 DE 102021210631
(43) Veröffentlichungstag der Anmeldung: 31.07.2024
(73) Patentinhaber: EJOT SE & Co. KG, 57319 Bad Berleburg (DE)
(72) Erfinder: HEINRICH, Kostja, 57319 Bad Berleburg (DE); PITZ, Michael, 35088 Battenberg (DE)
(74) Vertreter: Bardehle Pagenberg Partnerschaft mbB Patentanwälte Rechtsanwälte
(86) Internationale Anmeldenummer: PCT/EP2022/075935
(87) Internationale Veröffentlichungsnummer: WO 2023/046625

(56) Entgegenhaltungen:
- EP-A2- 0 586 306
- DE-A1- 102011 075 571
- FR-A1- 2 558 903

## Beschreibung

Die vorliegende Erfindung betrifft ein System und ein Verfahren zur Montage von Fassadenplatten an einem Untergrund.

Fassadenplatten werden mit Hilfe von Befestigungselementen, beispielsweise Schrauben, an einem Untergrund, meistens einer Wand befestigt. Damit die Fassadenplatten genau und ohne Beschädigung der Fassadenplatten montiert werden können und sich die Fassadenplatten trotzdem in gewissem Umfang relativ zu den Befestigungspunkten bewegen können - beispielsweise aufgrund von thermischen Veränderungen - wurden Zentriermittel entwickelt, wie sie beispielsweise in WO 2017/125166 A1 beschrieben. Ein Befestigungsmittel nach dem Stand der Technik zeigt das Dokument FR 2 558 903 A.

Es besteht aber weiterhin ein Bedarf daran, die Montage der Fassadenplatten zu vereinfachen und die Qualität der Montage zu verbessern.

Diese Aufgabe wird durch die in den unabhängigen Ansprüchen definierte Erfindung gelöst. Bevorzugte Ausführungsformen ergeben sich aus den Unteransprüchen sowie aus der folgenden detaillierten Beschreibung.

Die Aufgabe wird nach einem Ausführungsbeispiel durch ein System zur Montage von Fassadenplatten gelöst, das eine Zentrierhülse und ein Befestigungselement aufweist. Das Befestigungselement weist einen Schaft und einen Kopf auf.

Die Zentrierhülse ist eine Hülse, die in einer Bohrung der zu montierenden Fassadenplatte angeordnet wird. Sie weist eine Montagehilfe auf, die es dem Monteur vereinfacht, das Befestigungselement, das die Fassadenplatte halten soll, in der Mitte der Bohrung - also zentriert - zu setzen. Bei der vorliegenden Erfindung ist die Montagehilfe eine Öffnung im Boden der Zentrierhülse. Diese Öffnung muss nicht notwendigerweise von Anfang an in dem Boden vorhanden sein, sie kann auch während der Montage gebildet werden. Im Rahmen der vorliegenden Erfindung wird das Loch in der Fassadenplatte, mit dessen Hilfe die Fassadenplatte an einem Untergrund befestigt wird, als Bohrung bezeichnet, unabhängig davon, wie dieses Loch gebildet wurde. Die Bohrung kann also in die Fassadenplatte gebohrt worden sein, durch einen anderen Vorgang in der Fassadenplatte gebildet worden sein oder die Fassadenplatte kann beispielsweise auch direkt mit der Bohrung hergestellt worden sein.

Die Zentrierhülse weist außerdem einen Kragen auf, der am Rand der Bohrung auf der äußeren Seite - d.h. der im montierten Zustand dem Untergrund abgewandten Seite - der Fassadenplatte aufliegt. Im Rahmen der vorliegenden Erfindung werden vom Untergrund abgewandte Seiten auch als Oberseiten bezeichnet. Im montierten Zustand kann der Kopf des Befestigungselements auf der Oberseite dieses Kragens aufliegen. Dies verhindert, dass bei der Montage und einer Bewegung der Fassadenplatte relativ zu dem Befestigungselement die äußere Oberfläche der Fassadenplatte vom Kopf des Befestigungselements beschädigt wird.

Bei der vorliegenden Erfindung weist das Befestigungselement eine Bohrspitze auf. Die Nutzung der Bohrspitze ermöglicht ein schnelleres und sauberes Montieren der Fassadenplatte. Denn bei den im Stand der Technik üblichen Verfahren wird vor dem Setzen des Befestigungselements ein Bohrloch in den Untergrund gebohrt. Dies ist nicht nur ein zusätzlicher Verfahrensschritt, der das Montieren aufwendiger macht. Bei dem Bohren des Bohrlochs entsteht auch Bohrstaub, der beim Bohren und beim Entfernen des Bohrers aus dem Bohrloch an die Oberfläche und somit auf die Fassadenplatte gelangt. Wenn der Bohrstaub beispielsweise zwischen die Zentrierhülse und die Fassadenplatte oder zwischen das Befestigungselement und die Fassadenplatte gelangt, kann er bei der weiteren Montage Kratzer und Macken verursachen. Dies wird bei der vorliegenden Erfindung verhindert.

Da bei der vorliegenden Erfindung das Befestigungselement beim Setzen in der Öffnung in dem Boden der Zentrierhülse angeordnet ist, verhindert der Boden der Zentrierhülse, dass Bohrstaub, der gegebenenfalls beim Bilden eines Bohrlochs im Untergrund durch die Bohrspitze entsteht, an die Oberfläche, d.h. auf die äußere Seite des Bodens und somit auf die Fassadenplatte gelangt. Der Boden mit der Öffnung, in der der Schaft des Befestigungselements bei der Montage angeordnet ist, wirkt wie eine Abschirmung. Während dem Bilden des Bohrlochs im Untergrund, d.h. während der Bohrstaub entsteht, befindet sich die Unterseite des Bodens der Zentrierhülse vorzugsweise in einem Abstand von dem Untergrund. Dadurch kann der Bohrstaub ungehindert aus dem Bohrloch an die Oberfläche, also die Oberseite des Untergrunds gelangen und sich in einem Spalt zwischen der Fassadenplatte und dem Untergrund verteilen. Der Bohrstaub gelangt aber nicht beziehungsweise höchstens ein sehr geringer Anteil des Bohrstaubs gelangt in die Zentrierhülse, so dass der Bohrstaub die Relativbewegung zwischen dem Befestigungselement und der Zentrierhülse beziehungsweise der Bohrung der Fassadenplatte, in der die Zentrierhülse angeordnet ist, nicht verhindert oder behindert.

Der Spalt zwischen der Unterseite der Fassadenplatte und der Oberseite des Untergrunds entsteht, weil häufig zwischen dem Untergrund und der Fassadenplatte ein weiches, komprimierbares Material als Zwischenlage angeordnet wird. Als Material kann beispielsweise Zellkautschuk, zum Beispiel EPDM (Ethylen-Propylen-DienKautschuk) verwendet werden. Das weiche, komprimierbare Material kann beispielsweise als längliches Band ausgestaltet sein und beispielsweise parallel zur Unterkonstruktion angeordnet sein. Zurzeit ist es üblich ein Band mit einer Breite von 10 mm zu verwenden. Dem Fachmann sind aber auch andere Arten bekannt, wie die Zwischenlage zweckmäßig ausgestaltet sein kann. So kann das Material beispielsweise auch eine ringförmige Geometrie aufweisen und um die in der Fassadenplatte vorhandene Bohrung angeordnet werden. Durch die Komprimierbarkeit der Zwischenlage wird die fertigungsbedingte Dickentoleranz der Fassadenplatten und das Quell- und Schwindverhalten unter Witterungseinflüssen kompensiert.

Durch die Nutzung der Bohrspitze an dem Befestigungselement ist es auch nicht mehr notwendig, den Bohrer wieder aus dem Bohrloch zu entfernen. Dies war aber im Stand der Technik auch eine wesentliche Ursache für den Bohrstaub auf der Fassadenplatte.

Der Untergrund kann im Wesentlichen aus allen üblichen Baustoffen bestehen. Ein Beispiel ist ein Untergrund, der aus Tragprofilen gebildet wird. Hierfür können beispielsweise L-Profile oder T-Profile verwendet werden. Die Tragprofile bestehen vorzugsweise aus einem Metall, beispielsweise Aluminium oder Stahl. Der Untergrund kann aber auch aus Holz oder einen Holzwerkstoff bestehen. Die Bohrspitze und/oder ein Gewinde des Befestigungselements können in Abhängigkeit von dem Material und der Beschaffenheit des Untergrunds spezifisch ausgestaltet sein.

Damit die Fassadenplatte nach dem Setzen des Befestigungselements relativ zu dem Befestigungselement in alle Richtungen in gleicher Weise bewegt werden kann, ist der Boden der Zentrierhülse mittels mindestens einer Sollbruchstelle mit der restlichen Zentrierhülse verbunden. Durch diese Sollbruchstelle löst sich der Boden von der restlichen Zentrierhülse. Der Boden verbleibt an dem Befestigungselement und die restliche Zentrierhülse kann sich mit der Fassadenplatte relativ zu dem Befestigungselement und zu dem Boden bewegen. Dadurch kann der Boden weiterhin verhindern, dass etwaiger Bohrstaub an die Oberfläche gelangt. Außerdem ermöglicht diese Ausgestaltung die Relativbewegung, ohne das Zerteilen der Montagehilfe in einzelne Partikel. Denn das Lösen des Bodens über die mindestens eine Sollbruchstelle ist eine im Vergleich zum Stand der Technik sehr saubere Lösung, da durch die Sollbruchstelle die Montagehilfe normalerweise nicht zu einzelnen Partikeln führt, die wiederum Kratzer an der Oberfläche der Fassadenplatten verursachen können, wie das im Stand der Technik der Fall ist, oder die gewünschte Relativbewegung behindern können.

Bei dem erfindungsgemäßen Befestigungssystem weist der Schaft des Befestigungselements außerdem einen Vorsprung auf. Dieser Vorsprung verursacht ein Lösen des Bodens an der Sollbruchstelle, wenn sich das Befestigungselement in einer vorbestimmten Position relativ zum Boden der Zentrierhülse befindet. Im Rahmen der vorliegenden Erfindung bewegt sich das Befestigungselement in einer Montagerichtung, die im Wesentlichen der Achse des Befestigungselements bei der Montage entspricht. Die Montagerichtung erstreckt sich entlang dieser Achse in der Richtung von der äußeren Oberfläche der Fassadenplatte zum Untergrund. Diese äußere Oberfläche der Fassadenplatte wird im Rahmen der vorliegenden Erfindung auch als Oberseite der Fassadenplatte bezeichnet, während die innere Oberfläche der Fassadenplatte, die sich näher am Untergrund befindet, als Unterseite bezeichnet wird. In gleicher Weise ist die Oberseite des Kragens oder des Bodens die Seite, die von dem Untergrund abgewandt ist und die Unterseite die Seite, die dem Untergrund zugewandt ist. In Abhängigkeit von der Position des Befestigungselements entlang der Montagerichtung finden unterschiedliche Prozesse statt. Einer dieser Prozesse ist das Lösen des Bodens an der Sollbruchstelle.

Dieser Vorsprung sorgt dafür, dass wenn sich das Befestigungselement relativ zu der Zentrierhülse in Richtung Untergrund bewegt und der Vorsprung am Boden der Zentrierhülse anliegt, eine Kraft auf den Boden der Zentrierhülse wirkt, bis sich dieser von der restlichen Zentrierhülse löst. Dabei bildet der Kragen der Zentrierhülse eine Art Widerlager und verhindert somit, dass der Vorsprung die gesamte Zentrierhülse und nicht nur den Boden in Richtung Untergrund bewegt. Dieses Lösen kann zu einem Zeitpunkt stattfinden, bei dem die Bohrspitze das Bohrloch im Wesentlichen fertiggestellt hat und somit fast kein Bohrstaub mehr entsteht. Außerdem kann zu diesem Zeitpunkt der Kopf des Befestigungselements bereits in unmittelbarer Nähe zu dem Kragen der Zentrierhülse sein, um die Wahrscheinlichkeit zu reduzieren, dass etwaiger Bohrstaub an die Oberfläche gelangt.

In einer bevorzugten Ausführungsform ist der Vorsprung ringförmig an dem Schaft des Befestigungselements ausgestaltet. Dies hat den Vorteil, der der Druck vom Befestigungselement gleichmäßig auf den Boden übertragen wird. Außerdem kann der ringförmige Vorsprung einen etwaigen Spalt zwischen dem Schaft des Befestigungselements und dem Boden schließen.

In Abhängigkeit von der Ausgestaltung der Zentrierhülse relativ zur Fassadenplatte, kann es sein, dass das Lösen des Bodens ausreicht, um die relative Beweglichkeit zu ermöglichen. Dies ist beispielsweise der Fall, wenn bei der Zentrierhülse der Abstand zwischen der Unterseite des Kragens und der Oberseite des Bodens größer ist als die Dicke der zu montierenden Fassadenplatte. In dem Fall befindet sich der Boden immer unterhalb der Fassadenplatte und beeinflusst somit nach dem Lösen nicht die Relativbewegung zwischen Fassadenplatte und Befestigungselement. In diesem Fall hat die Zentrierhülse vorzugsweise zumindest in dem Bereich, der unter der Fassadenplatte hervorsteht, eine durchgehende umlaufende Wand, um zu verhindern, dass über einen Spalt zwischen Boden und Fassadenplatte Bohrstaub auf die Fassadenplatte gelangt.

Wenn sich der Boden der Zentrierhülse aber zwischen der Oberseite und der Unterseite der Fassadenplatte befindet, reicht es nicht aus, wenn der Boden nur gelöst wird, um die Relativbewegung zu ermöglichen. In dem Fall wird das Befestigungselement nach dem Lösen des Bodens weiter in Montagerichtung bewegt und der Vorsprung sorgt dafür, dass auch der Boden relativ zu dem Befestigungselement in Richtung Untergrund bewegt wird. Das Befestigungselement ist dann vorzugsweise derart ausgestaltet, dass der Kopf des Befestigungselements erst dann auf dem Kragen der restlichen Zentrierhülse aufliegt, wenn sich der Boden unterhalb der Unterseite der Fassadenplatte befindet.

Durch dieses einzigartige Befestigungssystem wird daher eine schnelle und saubere Montage von Fassadenplatten ermöglicht.

Der Kopf des Befestigungselements weist vorzugsweise eine Werkzeugaufnahme auf. Das Befestigungselement weist vorzugsweise zwischen der Bohrspitze und dem Vorsprung ein Gewinde auf. Darüber hinaus weist das Befestigungselement vorzugsweise zwischen dem Gewinde und dem Vorsprung einen gewindefreien Bereich auf.

In einer bevorzugten Ausführungsform sind die Zentrierhülse und das Befestigungselement derart ausgestaltet, dass der Vorsprung des Befestigungselements bei der Montage den Boden der Zentrierhülse bis auf den Untergrund bewegt. In dieser Position befindet sich vorzugsweise der gewindefreie Bereich zwischen dem Gewinde und dem Vorsprung in dem Untergrund. Der Vorsprung des Befestigungselements sorgt in dieser Position gegebenenfalls im Zusammenspiel mit dem Boden der Zentrierhülse dafür, dass ein schräg - d.h. nicht rechtwinklig - zur Oberfläche des Untergrunds ausgerichtetes Befestigungselement rechtwinklig ausgerichtet wird. Hierzu kann der Monteur beispielsweise das Befestigungselement bewusst überdrehen, was aber nicht zu einer Beschädigung der Gewinde führt, da sich der gewindefreie Bereich in dem Untergrund befindet. Dieses Ausrichten sorgt nicht nur dafür, dass der Kopf des Befestigungselement glatt auf der Fassadenplatte beziehungsweise auf dem Kragen aufliegt, sondern das Zusammenspiel zwischen Vorsprung und Untergrund sorgt auch für eine erhöhte Tragfähigkeit der Verbindung und für eine erhöhte Montagesicherheit.

Im Rahmen der vorliegenden Erfindung kann die Zentrierhülse zwischen dem Kragen und dem Boden unterschiedlich ausgestaltet sein. Beispielsweise können zwischen dem Kragen und dem Boden mehrere Stege angeordnet sein, die den Kragen mit dem Boden verbinden. Es ist aber beispielsweise auch möglich, dass der Kragen und der Boden durch eine umlaufende Wand miteinander verbunden sind. Die umlaufende Wand muss sich aber nicht notwendigerweise über den gesamten Abstand zwischen Boden und Kragen erstrecken. Die umlaufende Wand kann sich beispielsweise nur in der Nähe des Bodens befinden und über den Rest des Abstands erstrecken sich andere Mittel, wie beispielsweise die Stege. Eine derartige umlaufende Wand hat aber im Vergleich zu den Stegen den Nachteil, dass die Relativbewegung zwischen dem Befestigungselement und der Bohrung in der Fassadenplatte in alle Richtungen um die Dicke der umlaufenden Wand eingeschränkt wird. Dies ist bei der Verwendung der Stege nicht notwendigerweise der Fall, insbesondere wenn die Stege eine Geometrie haben, beispielsweise eine Dreiecksgeometrie, die bei einer Kollision des Befestigungselements mit einem der Stege, das Befestigungselement und den Steg aneinander vorbei führt.

Die Aufgabe wird auch durch ein Verfahren zur Montage einer Fassadenplatten an einem Untergrund gelöst. Dabei werden eine Zentrierhülse und ein Befestigungselement in einer Bohrung einer Fassadenplatte angeordnet. Die Zentrierhülse und das Befestigungselement können beispielsweise zuerst ineinander und dann gemeinsam in der Bohrung der Fassadenplatte angeordnet werden. Es ist aber auch beispielsweise möglich zuerst die Zentrierhülse in der Bohrung der Fassadenplatte anzuordnen und dann das Befestigungselement in der Zentrierhülse. Die Zentrierhülse weist einen Kragen und einem Boden mit einer Öffnung auf. Das Befestigungselement weist einen Kopf, einen Schaft und eine Bohrspitze auf.

Im Rahmen des Verfahrens wird das Befestigungselements in den Untergrund gesetzt. Dieses Setzen wird mit Hilfe der Bohrspitze des Befestigungselements durchgeführt. Die Bohrspitze bohrt dabei ein Loch in dem Untergrund. Bei dem Setzen wird das Befestigungselement in dem Untergrund befestigt. Während dem Setzen ist der Schaft des Befestigungselements in der Öffnung in dem Boden angeordnet.

Während dem Verfahren wird eine Sollbruchstelle zwischen dem Boden der Zentrierhülse und der restlichen Zentrierhülse gelöst. Dies passiert mit Hilfe eines Vorsprungs des Schafts des Befestigungselements und zwar wenn sich das Befestigungselement in einer vorbestimmten Position relativ zum Boden der Zentrierhülse befindet.

Die Erfindung wird nachfolgend anhand von Ausführungsbeispielen mit den beigefügten Zeichnungen näher erläutert. Aus den beschriebenen Ausführungsbeispielen ergeben sich weitere Einzelheiten, Merkmale und Vorteile des Gegenstands der Erfindung. Es zeigen:
- Figur 1: eine perspektivische Ansicht einer Ausführungsform des Systems gemäß der vorliegenden Erfindung,
- Figur 2: eine perspektivische Ansicht einer Ausführungsform einer Zentrierhülse, wie sie in Figur 1 gezeigt ist,
- Figur 3: eine perspektivische Ansicht einer Ausführungsform eines Befestigungselements, wie es in Figur 1 gezeigt ist, und
- Figur 4: die Montage einer Fassadenplatte an einem Untergrund mit Hilfe des in Figur 1 gezeigten Befestigungssystems.

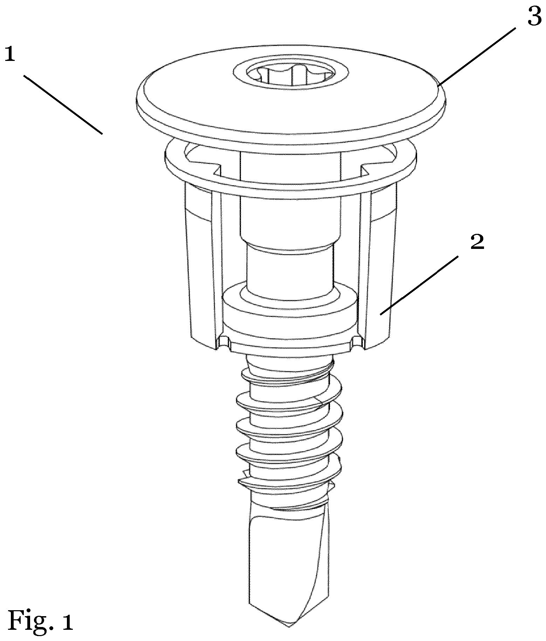

Figur 1 zeigt eine perspektivische Ansicht einer Ausführungsform des Systems 1 gemäß der vorliegenden Erfindung. Das System weist eine Zentrierhülse 2 und ein Befestigungselement 3 auf. Die Zentrierhülse 2 ist ausgestaltet, um in einer Bohrung beispielsweise einer Fassadenplatte in einer vordefinierten Position angeordnet zu werden und eine Anordnung des Befestigungselements 3 relativ zu der Bohrung - vorzugsweise zentral in der Bohrung - zu ermöglichen.

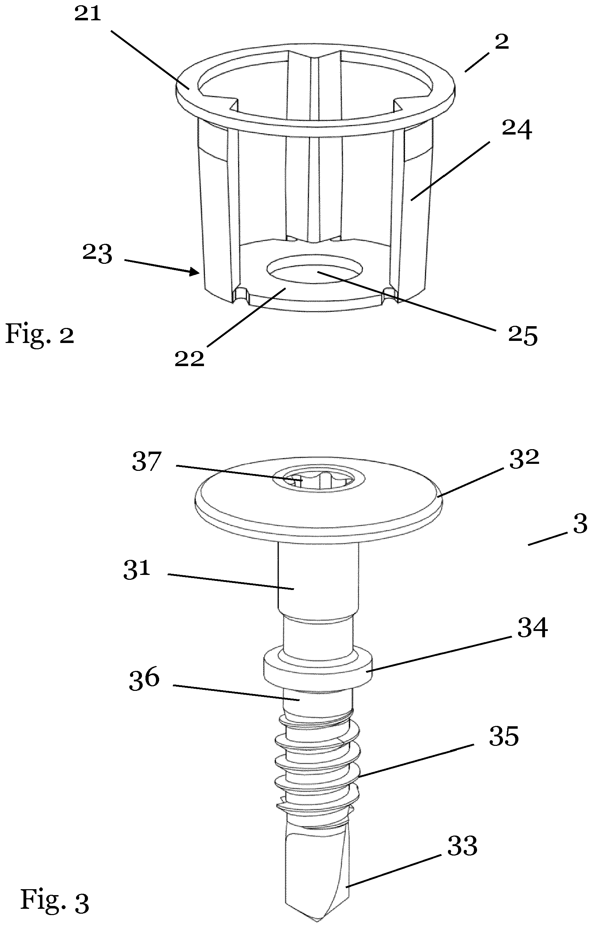

Figur 2 ist eine detaillierte perspektivische Ansicht der bereits in Figur 1 gezeigten Zentrierhülse 2. Die Zentrierhülse 2 weist einen Kragen 21 und einen Boden 22 auf. Der Boden 22 ist mit der restlichen Zentrierhülse 2 über mindestens eine Sollbruchstelle 23 verbunden. In dem in Figur 2 gezeigten Beispiel weist die Zentrierhülse drei Stege 24 auf, die zwischen dem Kragen 21 und dem Boden 22 angeordnet sind. Der Boden 22 ist jeweils über eine Sollbruchstelle 23 mit einem der Stege 24 verbunden. Die Verwendung von mehreren Stegen 24, wie in Figur 2 gezeigt, ist aber nur eine Möglichkeit. Dem Fachmann sind auch anderen Hilfsmittel bekannt, um den Boden 22 relativ zu dem Kragen 21 anzuordnen. Eine Alternative ist beispielsweise die Verwendung einer umlaufenden Wand.

Der Boden 22 der Zentrierhülse 2 weist eine Öffnung 25 auf. Diese Öffnung 25 ist ausgestaltet, um darin den Schaft 31 des Befestigungselements 3 des Befestigungssystems 1 aufzunehmen.

Figur 3 ist eine detaillierte perspektivische Ansicht des bereits in Figur 1 gezeigten Befestigungselements 3, wie es im Rahmen der vorliegenden Erfindung verwendet werden kann. Das Befestigungselement 3 weist einen Schaft 31 und einen Kopf 32 auf. Das Befestigungselement 3 weist außerdem eine Bohrspitze 33 auf, die ausgestaltet ist, um in einen Untergrund ein Loch zu bohren. Am Schaft 31 des Befestigungselements 3 ist ein Vorsprung 34 angeordnet.

Die in Figur 3 gezeigte Ausführungsform des Befestigungselements 3 weist an dem Schaft 31 nach der Bohrspitze 33 ein Gewinde 35 auf und zwischen dem Gewinde 35 und dem Vorsprung 34 befindet sich ein gewindefreier Bereich 36.

Der Kopf 32 des Befestigungselements 3 ist ausgestaltet, um auf dem Kragen 21 der Zentrierhülse 2 aufzuliegen. Hierfür hat der Kopf 32 in dem gezeigten Ausführungsbeispiel einen Außendurchmesser, der größer ist als der Außendurchmesser des Kragens 21. Der Kopf 32 weist außerdem eine Werkzeugaufnahme 37 auf.

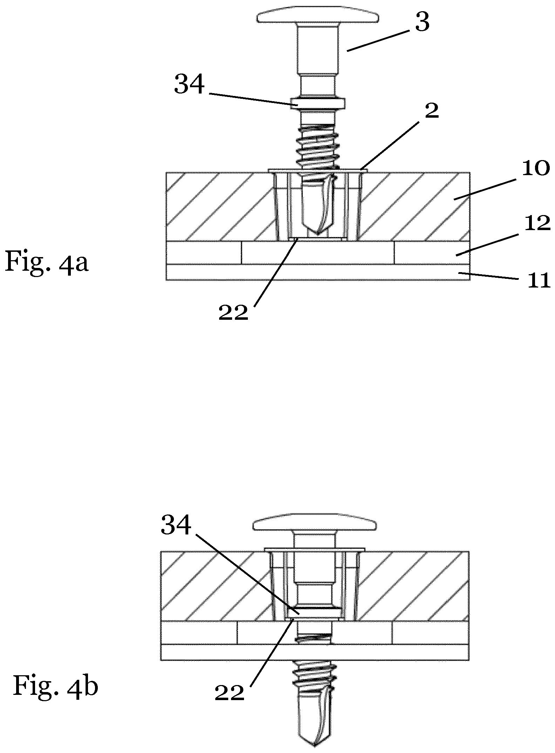

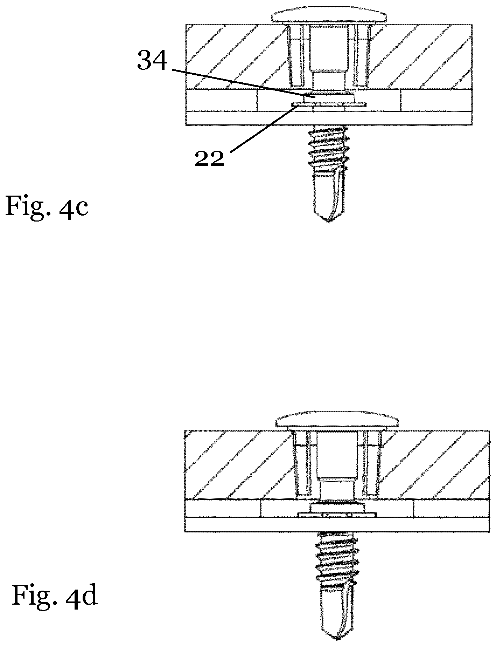

Figur 4 zeigt in mehreren Schritten die Montage einer Fassadenplatte 10 an einem Untergrund 11 mit Hilfe des in den Figuren 1 bis 3 gezeigten Systems 1.

Figur 4a zeigt die Fassadenplatte 10 mit dem darunter befindlichen Untergrund 11. In der hier gezeigten Realisierung befindet sich zwischen der Fassadenplatte 10 und dem Untergrund 11 noch die oben bereits beschriebene Zwischenlage 12.

Die Zentrierhülse 2 wird in einer Bohrung in der Fassadenplatte 10 angeordnet. Der Kragen 21 der Zentrierhülse 2 liegt am Rand der Bohrung auf der äußeren, d.h. dem Untergrund abgewandten Oberfläche der Fassadenplatte 10, die auch als Oberseite bezeichnet wird. In der in Figur 4 gezeigten Ausführungsform der Zentrierhülse 2 liegt der Boden 22 der Zentrierhülse 2 auf einer Ebene mit der inneren Oberfläche der Fassadenplatte 10, d.h. der dem Untergrund zugewandten Oberfläche der Fassadenplatte 10, die auch als Unterseite bezeichnet wird. Dies ist aber nur eine mögliche Ausführungsform. Es ist beispielsweise auch möglich, dass der Boden 22 der Zentrierhülse 2 beabstandet von der Unterseite der Fassadenplatte 10 in der Bohrung der Fassadenplatte 10 angeordnet ist. Darüber hinaus ist es auch möglich, dass der Boden 22 unterhalb der Unterseite der Fassadenplatte 10 angeordnet ist, d.h. zwischen der Unterseite der Fassadenplatte 10 und dem Untergrund 11. In dem zuletzt genannten Fall ist es allerdings zweckmäßig, wenn der Boden 22 eine durchgehende Mantelfläche aufweist, die einen etwaigen Spalt zwischen der Unterseite der Fassadenplatte und dem Boden 22 schließt, um zu vermeiden, dass Bohrstaub an dem Boden 22 vorbei an die äußere Oberfläche der Fassadenplatte gelangt.

Wie in Figur 4a gezeigt, wird das Befestigungselement 3 in der Zentrierhülse 2 angeordnet. Der Schaft 31 des Befestigungselements 3 mit der Bohrspitze 33 wird durch die Öffnung 25 in dem Boden 22 der Zentrierhülse 2 geführt und durch drehen des Befestigungselements 3 wird mit der Bohrspitze 33 ein Loch in den Untergrund 11 gebohrt. Dabei wird durch den Boden 22 der Zentrierhülse 2 verhindert, dass Bohrstaub an die äußere Oberfläche der Fassadenplatte 10 gelangt. Vorzugsweise ist der Durchmesser der Öffnung 25 im Boden 22 derart ausgestaltet, dass er nur etwas größer ist als der Durchmesser der Bohrspitze 33 des Befestigungselements 3. Hierdurch wird die Bohrspitze 33 bei der Montage zentriert, aber die Rotation des Befestigungselements 3 versetzt die Zentrierhülse 2 nicht in Rotation. Außerdem ist die Öffnung 25 in dem Boden 22 der Zentrierhülse 2 derart ausgestaltet, dass sich der Boden 22 erst dann von der restlichen Zentrierhülse 2 löst, wenn der Vorsprung 34 des Befestigungselements 3 an dem Boden 22 anliegt. Die beiden Durchmesser sind vorzugsweise auch derart aufeinander abgestimmt, dass der Spalte zwischen der Öffnung 25 und dem Schaft 31 während der Montage so gering ist, dass hierdurch im Wesentlichen kein Bohrstaub in die Zentrierhülse 2 gelangt.

Wie in Figur 4b gezeigt, gibt es bei der Montage einen Zeitpunkt, bei dem die Bohrspitze 33 das Loch in dem Untergrund 11 gebohrt hat und bei dem dann der Vorsprung 34 am dem Boden 22 der Zentrierhülse 2 anliegt. Durch ein weiteres Drehen des Befestigungselements 3 wird dieses beispielsweise mit Unterstützung des Gewindes 35 des Befestigungselements weiter in Richtung Untergrund 11 bewegt. Dabei drückt der Vorsprung 34 des Befestigungselements 3 gegen den Boden 22 bis sich dieser von der restlichen Zentrierhülse 2 an der mindestens einen Sollbruchstelle 23 löst.

Figur 4c zeigt nun den gelösten Boden 22 der Zentrierhülse 2, der von dem sich weiter in Montagerichtung bewegenden Befestigungselement 3, insbesondere dessen Vorsprung 34 in Richtung Untergrund 11 und somit unter die innere Oberfläche des Fassadenelements 10 bewegt wird. Der Boden 22 befindet sich somit in einer Position, in der er die Relativbewegung zwischen Fassadenplatte 10 und der darin angeordneten Zentrierhülse 2 gegenüber dem Befestigungselement 3 nicht behindert.

In einer bevorzugten Ausführungsform wird das Befestigungselement 3 soweit in die Montagerichtung bewegt, bis der Vorsprung 34 den Boden 22 gegen die Oberfläche des Untergrund 11 drückt. Diese Position ist in Figur 4d gezeigt. Hierbei kann beispielsweise die zwischen der Unterseite der Fassadenplatte 10 und der Oberseite des Untergrunds 11 angeordnete Zwischenlage 12 komprimiert werden, wie dies in Figur 4d gezeigt ist. Durch dieses Drücken gegen den Untergrund wird das Befestigungselement 3 rechtwinklig gegenüber dem Untergrund 11 ausgerichtet. Darüber hinaus sorgt diese Position auch für eine erhöhte Tragfähigkeit der Verbindung und für eine erhöhte Montagesicherheit.

## Patentansprüche

1. System (1) zur Montage von Fassadenplatten (10), aufweisend eine Zentrierhülse (2) mit einem Kragen (21) und einem Boden (22) und ein Befestigungselement (3) mit einem Kopf (32), einem Schaft (31) und einer Bohrspitze (33),
**dadurch gekennzeichnet, dass**
der Boden (22) der Zentrierhülse (2) mittels mindestens einer Sollbruchstelle (23) mit der restlichen Zentrierhülse verbunden ist und wobei der Boden (22) eine Öffnung (25) aufweist, in der der Schaft (31) des Befestigungselements (3) bei der Montage angeordnet ist und
wobei der Schaft (31) des Befestigungselements (3) einen Vorsprung (34) aufweist, der ein Lösen des Bodens (22) an der Sollbruchstelle (23) verursacht, wenn sich das Befestigungselement (3) in einer vorbestimmten Position relativ zum Boden (22) der Zentrierhülse (2) befindet.

2. Das System (1) gemäß Anspruch 1, wobei der Vorsprung (35) ringförmig an dem Schaft (31) des Befestigungselements ausgestaltet ist.

3. Das System (1) gemäß einem der Ansprüche 1 oder 2, wobei der Kopf (32) des Befestigungselements (3) eine Werkzeugaufnahme (37) aufweist.

4. Das System (1) gemäß einem der vorhergehenden Ansprüche, wobei der Schaft (31) des Befestigungselements (3) zwischen der Bohrspitze (33) und dem Vorsprung (34) ein Gewinde (35) aufweist.

5. Das System (1) gemäß Anspruch 4, wobei der Schaft (31) des Befestigungselements (3) zwischen dem Vorsprung (34) und dem Gewinde (35) einen gewindefreien Bereich (36) aufweist.

6. Das System (1) gemäß einem der vorhergehenden Ansprüche, wobei zwischen dem Boden (22) und dem Kragen (21) der Zentrierhülse (2) Stege (24) angeordnet sind, die den Boden (22) mit dem Kragen (21) verbinden.

7. Verfahren zur Montage von Fassadenplatten (10), aufweisend Anordnen einer Zentrierhülse (2) und eines Befestigungselements (3) in einer Bohrung einer Fassadenplatte (10), wobei die Zentrierhülse (2) einen Kragen (21) und einem Boden (22) mit einer Öffnung (25) aufweist und das Befestigungselement (3) einen Kopf (32), einen Schaft (31) und eine Bohrspitze (33) aufweist,
Setzen des Befestigungselements (3) in einem Untergrund (11) mit Hilfe der Bohrspitze (33), wobei der Schaft (31) des Befestigungselements (3) in der Öffnung (25) in dem Boden (22) der Zentrierhülse (2) angeordnet ist, Lösen einer Sollbruchstelle (23) zwischen dem Boden (22) der Zentrierhülse (2) und der restlichen Zentrierhülse mit Hilfe eines Vorsprungs (34) des Schafts (31) des Befestigungselements (3), wenn sich das Befestigungselement (3) in einer vorbestimmten Position relativ zum Boden (22) der Zentrierhülse (2) befindet.

## Claims

1. System (1) for mounting facade panels (10), comprising a centring sleeve (2) with a collar (21) and a base (22) and
a fastening element (3) with a head (32), a shaft (31) and a drill bit (33),
**characterized in that**
the base (22) of the centring sleeve (2) is connected to the rest of the centring sleeve by means of at least one predetermined breaking point (23) and wherein the base (22) comprises an opening (25) in which the shaft (31) of the fastening element (3) is arranged during mounting and
wherein the shaft (31) of the fastening element (3) comprises a projection (34) which causes a release of the base (22) at the predetermined breaking point (23) when the fastening element (3) is in a predetermined position relative to the base (22) of the centring sleeve (2).

2. System (1) according to claim 1, wherein the projection (35) is formed annularly on the shaft (31) of the fastening element.

3. System (1) according to one of claims 1 or 2, wherein the head (32) of the fastening element (3) comprises a tool receptacle (37).

4. System (1) according to one of the preceding claims, wherein the shaft (31) of the fastening element (3) comprises a thread (35) between the drill bit (33) and the projection (34).

5. System (1) according to claim 4, wherein the shaft (31) of the fastening element (3) comprises a thread-free region (36) between the projection (34) and the thread (35).

6. System (1) according to one of the preceding claims, wherein bars (24) are arranged between the base (22) and the collar (21) of the centring sleeve (2), which bars (24) connect the base (22) to the collar (21).

7. Method for mounting facade panels (10), comprising
arranging a centring sleeve (2) and a fastening element (3) in a bore of a facade panel (10), wherein the centring sleeve (2) comprises a collar (21) and a base (22) with an opening (25) and the fastening element (3) comprises a head (32), a shaft (31) and a drill bit (33),
placing the fastening element (3) in a substrate (11) by means of the drill bit (33), wherein the shaft (31) of the fastening element (3) is arranged in the opening (25) in the base (22) of the centring sleeve (2),
releasing a predetermined breaking point (23) between the base (22) of the centring sleeve (2) and the rest of the centring sleeve by means of a projection (34) of the shaft (31) of the fastening element (3) when the fastening element (3) is in a predetermined position relative to the base (22) of the centring sleeve (2).

## Revendications

1. Système (1) de montage de panneaux de façade (10), comportant
une douille de centrage (2) avec un collet (21) et un fond (22) et un élément de fixation (3) avec une tête (32), une tige (31) et une pointe de perçage (33),
**caractérisé en ce que** le fond (22) de la douille de centrage (2) est relié au reste de la douille de centrage au moyen d'au moins un point de rupture (23), et dans lequel le fond (22) comporte une ouverture (25) dans laquelle la tige (31) de l'élément de fixation (3) est disposée lors du montage et dans lequel la tige (31) de l'élément de fixation (3) comporte une saillie (34) qui provoque un détachement du fond (22) sur le point de rupture (23) lorsque l'élément de fixation (3) se trouve dans une position prédéfinie par rapport au fond (22) de la douille de centrage (2).

2. Système (1) selon la revendication 1, dans lequel la saillie (35) est conçue en forme d'anneau sur la tige (31) de l'élément de fixation.

3. Système (1) selon l'une des revendications 1 ou 2, dans lequel la tête (32) de l'élément de fixation (3) comporte un logement d'outil (37).

4. Système (1) selon l'une des revendications précédentes, dans lequel la tige (31) de l'élément de fixation (3) comporte un filetage (35) entre la pointe de perçage (33) et la saillie (34).

5. Système (1) selon la revendication 4, dans lequel la tige (31) de l'élément de fixation (3) comporte une zone sans filetage (36) entre la saillie (34) et le filetage (35).

6. Système (1) selon l'une des revendications précédentes, dans lequel des nervures (24) sont disposées entre le fond (22) et le collet (21) de la douille de centrage (2), qui relient le fond (22) au collet (21).

7. Procédé de montage de panneaux de façade (10), comportant
l'agencement d'une douille de centrage (2) et d'un élément de fixation (3) dans un trou d'une plaque de façade (10), dans lequel la douille de centrage (2) comporte un collet (21) et un fond (22) avec une ouverture (25) et l'élément de fixation (3) comporte une tête (32), une tige (31) et une pointe de perçage (33),
la mise en place de l'élément de fixation (3) dans un support (11) à l'aide de la pointe de perçage (33), dans lequel la tige (31) de l'élément de fixation (3) est disposée dans l'ouverture (25) dans le fond (22) de la douille de centrage (2),
le détachement d'un point de rupture (23) entre le fond (22) de la douille de centrage (2) et le reste de la douille de centrage à l'aide d'une saillie (34) de la tige (31) de l'élément de fixation (3) lorsque l'élément de fixation (3) se trouve dans une position prédéfinie par rapport au fond (22) de la douille de centrage (2).
